# EUROPEAN PATENT APPLICATION

(11) **EP 4 783 574 A2**
(43) Date of publication of application: **29.07.2026**
(21) Application number: 26184719.8
(22) Date of filing: 12.06.2026
(51) Int. Cl.: H04N 19/115, H04N 19/164, H04N 19/17, H04N 19/167

(54) **METHOD AND APPARATUS FOR TRANSMITTING IMAGE, STORAGE MEDIUM AND PROGRAM PRODUCT**

(30) Priority: 17.09.2025 CN 202511331946
(71) Applicant: Apollo Intelligent Driving Technology (Beijing) Co., Ltd., Haidian District Beijing 100085 (CN)
(72) Inventor: XU, Lihua, Beijing, 100085 (CN)
(74) Representative: Lucke, Andreas

(57) **Abstract**

The present disclosure provides a method and apparatus for transmitting an image, a computer-readable storage medium, and a computer program product, relating to the technical fields of artificial intelligence such as image compression, computer vision, and autonomous driving. A specific implementation of the method includes: determining a collection environment corresponding to a target image based on a collection position of the target image in an electronic map; determining a target bit rate based on the collection environment; compressing the target image based on the target bit rate to obtain a compressed image; and uploading the compressed image to a target device based on a preset communication path. In this way, the collection environment can be evaluated through a collection position of the image, and the bit rate used when the image is uploaded can be dynamically adjusted based on differences in the collection environment. This enables, on the premise of ensuring the use quality of the uploaded image, reducing the amount of transmission resources used during the image upload process and lowering bandwidth requirements during the transmission process.

## Description

### TECHNICAL FIELD

The present disclosure relates to the technical field of computers, and specifically to the technical fields of artificial intelligence such as image compression, computer vision, and autonomous driving, and particularly to a method and apparatus for transmitting an image, a computer-readable storage medium, and a computer program product.

### BACKGROUND

With the development and advancement of science and technology, in order to reduce driving difficulty, alleviate the burden on drivers, and improve driving safety, advanced driving assistance, autonomous driving, and other technologies have emerged.

In these technologies, data processing models, image processing models, decision models, and the like may be used to provide auxiliary information to drivers, or at least to achieve management and control of a vehicle to a certain extent, thereby helping drivers complete driving tasks more safely and conveniently.

In this context, the capabilities of these models, particularly their processing capabilities for information and images, have become key factors in the effectiveness and success of technical implementation. For this reason, in order to enhance the capabilities of the models and train the models more effectively, real scene images are often used in practice to train the models, with the expectation that the models can have superior processing capabilities for images and information in real-world scenarios.

Since the training effect of a model is often directly related to the quality and quantity of images used, how to more effectively acquire and utilize real scene images, reduce resource consumption in the process of acquiring scene images, and address the demand and challenges for a large number of scene images, is a matter worthy of attention and urgent need.

### SUMMARY

Embodiments of the present disclosure propose a method and apparatus for transmitting an image, an electronic device, a computer-readable storage medium, and a computer program product.

In a first aspect, embodiments of the present disclosure propose a method for transmitting an image, including: determining a collection environment corresponding to a target image based on a collection position of the target image in an electronic map; determining a target bit rate based on the collection environment; compressing the target image based on the target bit rate to obtain a compressed image; and uploading the compressed image to a target device based on a preset communication path.

In a second aspect, embodiments of the present disclosure provide an apparatus for transmitting an image, including multiple units configured to perform the method for transmitting an image according to any implementation of the first aspect.

In a third aspect, embodiments of the present disclosure provide a non-transitory computer-readable storage medium storing computer instructions, where the computer instructions are used to cause a computer to perform the method for transmitting an image according to any implementation of the first aspect.

In a fourth aspect, embodiments of the present disclosure provide a computer program product including a computer program, where the computer program, when executed by a processor, implements the method for transmitting an image according to any implementation of the first aspect.

The method and apparatus for transmitting an image, the electronic device, the computer-readable storage medium, and the computer program product provided by embodiments of the present disclosure first determine a collection environment corresponding to a target image based on a collection position of the target image in an electronic map; then determine a target bit rate based on the collection environment; next compress the target image based on the target bit rate to obtain a compressed image; and finally upload the compressed image to a target device based on a preset communication path. The present disclosure can evaluate a collection environment through a shooting/collection position of an image, and dynamically adjust the bit rate used when the image is uploaded based on differences in the collection environment. This enables, on the premise of ensuring the use quality of the uploaded image, reducing the amount of transmission resources used during the image upload process and lowering bandwidth requirements during the transmission process.

It shall be understood that the content described in this section is not intended to identify key or essential features of the embodiments of the present disclosure, nor to limit the scope of the present disclosure. Other features of the present disclosure will be readily understood from the following description.

### BRIEF DESCRIPTION OF THE DRAWINGS

Other features, objectives, and advantages of the present disclosure will become more apparent through detailed descriptions of non-limiting embodiments with reference to the following accompanying drawings:
Fig. 1 is an exemplary system architecture to which the present disclosure may be applied;
Fig. 2 is a flowchart of a process for transmitting an image according to an embodiment of the present disclosure;
Fig. 3 is a flowchart of a process for determining a collection environment according to an embodiment of the present disclosure;
Fig. 4 is a flowchart of a process for transmitting an image specifically implemented in an application scenario according to an embodiment of the present disclosure;
Fig. 5 is a structural block diagram of an apparatus for transmitting an image according to an embodiment of the present disclosure; and
Fig. 6 is a schematic structural diagram of an electronic device adapted for executing the method for transmitting an image according to an embodiment of the present disclosure.

### DETAILED DESCRIPTION OF EMBODIMENTS

The following description of exemplary embodiments of the present disclosure is provided with reference to the accompanying drawings, which includes various details of the embodiments of the present disclosure to facilitate understanding and should be regarded as merely exemplary. Accordingly, those of ordinary skill in the art will recognize that various changes and modifications may be made to the embodiments described herein without departing from the scope and spirit of the present disclosure. Similarly, for clarity and conciseness, descriptions of well-known functions and structures are omitted in the following description. It should be noted that, in the absence of conflict, the embodiments in the present disclosure and features in the embodiments may be combined with each other.

In addition, in the technical solutions involved in the present disclosure, the processing of user personal information involved (for example, the target image involved subsequently in the present disclosure, and the collection position of the target image, and the like), including acquisition, storage, use, processing, transmission, provision, disclosure, and the like, all comply with the provisions of relevant laws and regulations and do not violate public order and good morals.

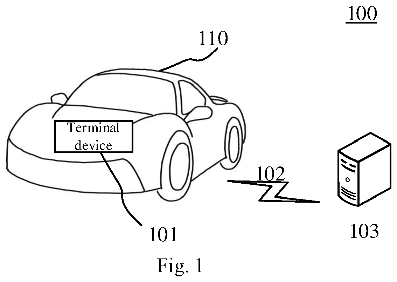

Fig. 1 illustrates an exemplary system architecture 100 of embodiments to which the method and apparatus for transmitting an image, the electronic device, and the computer-readable storage medium of the present disclosure may be applied.

As shown in Fig. 1, the system architecture 100 may include a vehicle 110, a terminal device 101, a network 102, and a server 103. The network 102 serves as a medium providing a communication link between the terminal device 101 and the server 103. The network 102 may include various connection types, such as wired, wireless communication links, or fiber optic cables, and the like.

A user may use the terminal device 101 to interact with the server 103 via the network 102 to receive or transmit messages and the like. Various applications for implementing information communication between the terminal device 101 and the server 103 may be installed on the terminal device 101 and the server 103, such as image collection applications, vehicle control applications, instant messaging applications, and the like.

The terminal device 101 and the server 103 may be hardware or software. When the terminal device 101 is hardware, it may be various electronic devices having a display screen, including but not limited to smart phones, tablet computers, laptop portable computers, desktop computers, in-vehicle computers installed in the vehicle 110, and the like. When the terminal device 101 is software, it may be installed in the electronic devices listed above, and may be implemented as multiple pieces of software or software modules, or as a single piece of software or software module. No specific limitation is made herein. When the server 103 is hardware, it may be implemented as a distributed server cluster composed of multiple servers, or as a single server. When the server is software, it may be implemented as multiple pieces of software or software modules, or as a single piece of software or software module. No specific limitation is made herein.

The terminal device 101 may provide various services through various built-in applications. Taking an image collection application that provides a service of providing images collected by the terminal device 101 (for example, images collected when a vehicle in which the terminal device 101 is installed moves) to the server 103 as an example, the terminal device 101 may achieve the following effects when running the image collection application: first, determining a collection environment corresponding to a target image based on a collection position of the target image in an electronic map; then, the terminal device 101 determines a target bit rate based on the collection environment; next, the terminal device 101 compresses the target image based on the target bit rate to obtain a compressed image; and finally, the terminal device 101 uploads the compressed image to a target device such as the server 103 based on a preset communication path.

Correspondingly, since the target image is collected and uploaded by the terminal device 101, the apparatus for transmitting an image described subsequently in the present disclosure is also disposed in the terminal device 101. It should be understood that, in some scenarios, the terminal device 101 may be a device in the vehicle that is only responsible for image collection, and in such a case, the terminal device 101 may use another terminal device (not shown in the figure) that actually communicates with the server 103 to actually complete the subsequent process of uploading the compressed image to the server 103.

It should be understood that the numbers of terminal devices, networks, and servers in Fig. 1 are merely illustrative. According to implementation needs, there may be any number of terminal devices, networks, and servers.

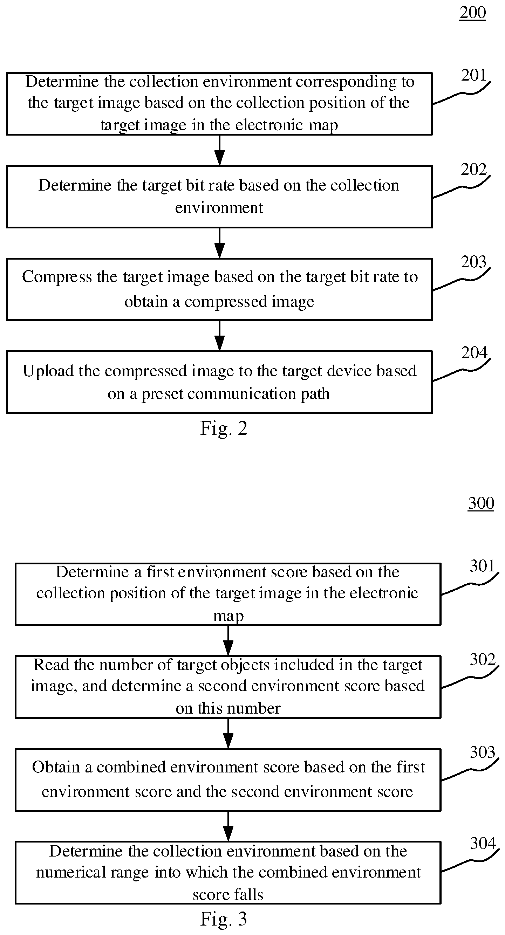

Please refer to Figure 2, which is a flowchart of an image transmission process provided by an embodiment of the present disclosure, including process 200.

Process 200 specifically includes the following steps.

Step 201: Determine the collection environment corresponding to the target image based on the collection position of the target image in the electronic map.

In an embodiment of the present disclosure, this step is intended to have the execution entity of the image transmission method (for example, the terminal device 101 shown in Figure 1) obtain the target image, and determine the collection environment corresponding to the target image based on the collection position of the target image in the electronic map. The collection environment may be used to characterize the real environment or environmental conditions in which the collection device that captured the target image was situated when acquiring the target image. Alternatively, the collection environment may be understood as characterizing the real environment or environmental conditions in which the vehicle acquiring the target image is currently situated.

In some embodiments, the target image may also be acquired by the execution entity itself. For example, when the execution entity is an in-vehicle device with imaging capability, the target image may be an image captured and acquired by the execution entity during the movement or travel of the vehicle, capturing the environment and scenes surrounding the vehicle.

After obtaining the target image, the execution entity may first determine the shooting and collection position of the target image, then mark this shooting and collection position on the electronic map, and determine the aforementioned collection environment based on the marked collection position.

It should be understood that the shooting and collection action of the target image and the marking action of marking the shooting and collection position on the electronic map do not necessarily need to be continuous in time. That is, the execution entity may perform the shooting and collection first, and then mark the shooting and collection position on the electronic map when it needs to upload the image.

Alternatively, when the target image is captured by another device that is not the execution entity, and the execution entity obtains the target image by sending a collection command to that device, the execution entity may obtain the target image only when it needs to upload it (for example, when uploading to server 103).

As discussed above in this step, after the execution entity determines the collection position of the target image in the electronic map, it may determine the corresponding collection environment based on this collection position.

Specifically, for the collection environment, it is usually specifically divided based on the actual scene corresponding to the collection position, in order to characterize the aforementioned real environment and environmental conditions. For example, the collection environment may be specifically divided based on the real attributes of the road. For example, based on differences in corresponding real space and position, the collection environment may be determined as an intersection environment, ordinary road environment, highway environment, etc.

Accordingly, after determining the collection position in the electronic map, the execution entity may determine the corresponding specific collection environment based on whether the execution entity is located at an intersection, highway, etc. in the electronic map. For example, if the collection position is located within an intersection, the execution entity may determine that the collection environment is an intersection environment.

In some embodiments, the collection environments that may be selected and used may also be further divided more finely based on historical data, for example, into intersections with frequent historical accidents, intersections on road sections with low historical accident rates, intersections with large traffic flow, intersections with small traffic flow, etc. Thereby, through more detailed division of the collection environment, it is possible to subsequently more finely combine the collection environment conditions to differentially configure the target bit rate.

In some embodiments, for more fine-grained division of the collection environment, some more general concepts may also be used to enable comprehensive evaluation of multiple different dimensions of determination indicators. For example, the division may be based on high-attention intersections, medium-attention intersections, and low-attention intersections. Such attention may be comprehensively determined by integrating perspectives such as historical accident occurrence frequency and traffic flow.

It should be understood that in the process of dividing the collection environment, the division may also be completed based on the number of target images historically uploaded for this collection position (or within a certain range of the collection position). For example, when the collection position is located on a newly added or constructed road section displayed in the electronic map, the execution entity may determine the collection environment as "high attention." For example, for a newly added intersection on the electronic map, it may be a "high-attention intersection."

In some embodiments, the aforementioned intersections, ordinary roads, highways, etc., may also serve as a "dimension" for determining the collection environment. For example, the aforementioned collection environment may be directly divided according to the criteria of high-attention collection environment, medium-attention collection environment, and low-attention collection environment. For example, based solely on the information that the collection position corresponding to the target image is an intersection position, the execution entity may choose to classify its collection environment as a high-attention collection environment.

Step 202: Determine the target bit rate based on the collection environment.

In an embodiment of the present disclosure, after the execution entity determines the collection environment based on the aforementioned Step 201, it may correspondingly determine a target bit rate for compressing the target image based on this collection environment. The target bit rate may be the file size that the target image should have when being transmitted.

This file size is usually less than or equal to the original size of the target image; that is, the target bit rate is typically used to compress the target image to meet upload requirements. In other words, the target image needs to be compressed to this target bit rate to obtain a compressed image at the target bit rate, which can then satisfy the transmission requirements and be correspondingly transmitted.

For the target bit rate, it actually corresponds to the collection environment. Alternatively, the target bit rate corresponds to the requirements of the image recipient for image clarity, content clarity, etc. in this collection environment.

For example, for the aforementioned examples of "high attention," "medium attention," and "low attention," a high-attention collection environment may have a higher target bit rate compared to a medium-attention collection environment. Thereby, for a high-attention collection environment, more transmission resources may be used to provide the target image acquired from this collection environment in a more detailed and clear manner.

Typically, a correspondence table between collection environments and bit rates may be maintained in advance. Then, after the execution entity determines the collection environment, the execution entity may choose to invoke and use this correspondence table, and read the bit rate corresponding to the collection environment from the correspondence table as the target bit rate.

As discussed above, this target bit rate is actually used to "guide" the compression process of the target image. By way of example, if the target bit rate corresponding to collection environment A is Z (for example, it may be determined based on the encoding method used for collection environment A), then the execution entity may compress the target image acquired from this collection environment A based on this target bit rate, to obtain a compressed image that satisfies the requirement of target bit rate Z.

The bit rate corresponding to the collection environment (or, the target bit rate) may be correspondingly set based on the communication capability between the execution entity and the (target) image user, the amount of communication resources that can be utilized, and the actual requirements of the image user for the target image acquired in this collection environment. For example, as discussed above, as the attention level of the collection environment to the image user increases, the corresponding bit rate for this collection environment will also increase.

By way of example, if it is desired to train a model for decision-making capability in complex scenarios, then as the collection environment becomes more "complex," it may be required by the image user to utilize more transmission resources to transmit the target image and to transmit a clearer target image. In such cases, for the execution entity, it may choose to use more transmission resources to provide the target image (i.e., a larger target bit rate, a larger compression target) to respond to the requirements and expectations of the image user.

In some embodiments, as traffic environments become increasingly complex and diverse, the division of collection environments also becomes more complex. For example, based on different reference or requirement dimensions, multiple different collection environments may need to be divided for relatively similar environments and requirements. Thereby, in order to reduce the configuration cost of target bit rates and avoid the need to configure corresponding target bit rates one by one for each collection environment, it is also possible to choose to configure corresponding target bit rates based on a dimension such as environmental safety level.

Then, by determining the correspondence relationship between collection environments and environmental safety levels, the execution entity may obtain the corresponding target bit rate by classifying the collection environment into an environmental safety level. Thereby, not only can collection environments be flexibly configured subsequently, but the execution entity can also utilize collection environments abstractly generated by the execution entity itself to complete the image transmission process provided by the embodiments of the present disclosure. For example, this "abstracted collection environment" is not one of the pre-configured collection environments, but rather a new collection environment "summarized" by the execution entity based on the position of the target image, etc., a collection environment not previously divided.

That is, if the execution entity fails to classify the collection environment of the target image into a known, preset collection environment based at least on the collection position, or based on the collection position and the number of target objects to be discussed below, then the execution entity may summarize a new collection environment through abstraction, and determine its corresponding target bit rate based on the environmental safety level to which the new collection environment belongs.

Specifically for "abstraction," after determining the collection position in the electronic map, the execution entity may abstract a collection environment based on indicators and parameters related to determining the environmental safety level corresponding to this collection position, such as traffic flow, lane line clarity, pedestrian flow, number of intersection sign installations, etc., and determine the target bit rate by classifying the collection environment into an environmental safety level and utilizing the reference bit rate corresponding to that environmental safety level.

For example, the execution entity may determine that the environmental safety level of the abstracted collection environment is a high environmental safety level based on large traffic flow, insufficient lane line clarity, and few intersection sign installations.

Then, the execution entity determines the corresponding reference bit rate as the target bit rate using this "high environmental safety level." Thereby, not only can the execution entity still match and determine the target bit rate based on the environmental safety level using this "abstracted collection environment" even when fewer or even no specific, actual collection environments are pre-configured.

Through this approach, not only can the cost of dividing and determining collection environments be reduced, but it can also avoid difficulties in matching corresponding target bit rates caused by unreasonable or overly fragmented collection environment divisions.

In some embodiments, the environmental safety level may be determined based on a trained level determination model. For example, sample collection environments may be used as input samples (or sample information used to determine these sample collection environments, such as sample collection positions, etc., may be used as inputs), with their corresponding sample environmental safety levels as output samples, to train an initial level determination model (for example, the initial level determination model may be a large language model) to obtain the level determination model.

A Large Language Model (LLM) is an artificial intelligence model designed to understand and generate human language, and the LLM may correspondingly perform processing operations based on the content it understands to obtain corresponding processing results. For example, after obtaining the collection environment, the collection environment may be associated with at least one level in the environmental safety levels.

An LLM may be trained on large amounts of text data and can perform a wide range of tasks, including text summarization, translation, sentiment analysis, etc. LLMs are characterized by their large scale, typically including a large number of parameters to help them learn complex patterns in language data. These models are usually based on deep learning architectures such as transformers, which help them provide better processing performance on various natural language processing tasks.

For the bit rate corresponding to the environmental safety level (to distinguish it from the bit rate directly corresponding to the collection environment, it may be referred to as a reference bit rate), the correspondence relationship between the two may be maintained and stored through a preset level-to-bit-rate correspondence table. Accordingly, after the execution entity classifies the collection environment into the corresponding environmental safety level, the execution entity may use the reference bit rate corresponding to the environmental safety level (for example, this reference bit rate may also be recorded in the level-to-bit-rate correspondence table) as the target bit rate corresponding to the collection environment through this level-to-bit-rate correspondence table.

Typically, the environmental safety level and the target bit rate are positively correlated. Thereby, as the environmental safety level increases (i.e., as safety requirements and attention increase), the execution entity can proactively and adaptively upload the target image at a higher target bit rate, avoiding safety risks due to insufficient image clarity and other reasons.

Step 203: Compress the target image based on the target bit rate to obtain a compressed image.

In an embodiment of the present disclosure, after determining the target bit rate based on the aforementioned Step 202, the execution entity may compress the target image to this target bit rate to obtain a compressed image at this target bit rate. For example, the execution entity may compress the target image according to the target bit rate through methods such as Lossy Compression or Lossless Compression to obtain the compressed image.

In some embodiments, if the target image is actually uploaded continuously and together with other (target) images in the form of a video or image group composed of consecutive images, then in such cases, the execution entity may estimate the size of the compressed image based on this target bit rate, and complete the compression of the target image using this size.

For example, after receiving an upload task for multiple consecutive (target) images, the execution entity may first determine whether the images belongs to the same collection environment. If they do, the execution entity may determine the target bit rate corresponding to this collection environment, and complete the upload of multiple target images using this target bit rate.

In some embodiments, if the images do not belong to the same collection environment, or if the execution entity does not first choose to determine whether the collection environments of the images are the same, the execution entity may choose to first determine the target bit rate based on the collection environment of the first target image, and then in the subsequent processing, dynamically adjust the target bit rate to be used next by compressing and uploading while detecting whether the collection environment of the next target image corresponds to the current target image's collection environment.

For example, if the collection environment corresponding to the next target object is a collection environment with a higher target bit rate, the execution entity may correspondingly use a new, higher target bit rate to complete subsequent upload tasks.

In some embodiments, for continuous upload scenarios, after each determination or adjustment of the target bit rate, the determined or adjusted target bit rate may first be used to complete a preset number of upload tasks before re-evaluating the target bit rate, to avoid errors caused by frequent changes in the target bit rate.

For ease of understanding hereafter, only the case of a single target image will be used as an example. Accordingly, the target bit rate may be simply understood as being directly corresponding to the size of the compressed image (i.e., it is no longer necessary to calculate the compression rate based on the target bit rate and the number of target images, and determine the file size corresponding to the compressed image).

In some embodiments, for a specific target image, during the process of compressing the target image based on the target bit rate to obtain a compressed image, the execution entity may also differentially determine the file size corresponding to each region in the target image based on the types of target objects included in the target image. Thereby, even when using the same target bit rate and the same size of compressed image, more valuable content can still be differentially highlighted and focused on.

For example, based on the example where the target bit rate directly corresponds to the file size of the compressed image, the execution entity may first allocate corresponding target sub-bit rates from the target bit rate for each object based on the types of objects included in the target image. This target sub-bit rate is used to compress the portion of the target image corresponding to this object, or the region where this object is located.

In some embodiments, the execution entity may determine the importance proportion corresponding to each type based on the collection environment. Then, the execution entity allocates the usable file size, or target sub-bit rate, for each object correspondingly based on this importance proportion.

For example, if objects are classified into types such as environmental objects, traffic indication objects, traffic participant objects, etc., the execution entity may differentially determine the attention level and importance of each type of object based on different requirements of the image user, and allocate the target sub-bit rate that each object can use based on this attention level and importance.

By way of example, if the target image is more expected to be used for training a model recognition capability for traffic participant objects, then for the region where traffic participant objects are located, the execution entity may allocate more target sub-bit rates to enable the region to be presented more clearly in the compressed image.

In practice, the specific proportions for allocating target sub-bit rates may be comprehensively determined based on the number of categories included in the target image and the number of objects under each category. For example, the execution entity may first determine the total target sub-bit rate that can be allocated to each category based on the number of categories, and then determine the actual target sub-bit rate allocated to each object through methods such as equal distribution.

Thereby, through this approach, without changing the size of the compressed image, "high-value content" that is more likely to be attended to and used can be more prominently and preferentially presented, enabling transmission resources to be used more effectively.

Step 204: Upload the compressed image to the target device based on a preset communication path.

In an embodiment of the present disclosure, after completing compression based on the aforementioned Step 203, the execution entity may upload the compressed image to a target device (for example, server 103) based on a preset communication path (with the target device) for use by the target device.

The image transmission method provided by the embodiment of the present disclosure first determines the collection environment corresponding to the target image based on the collection position of the target image in the electronic map; then determines the target bit rate based on the collection environment; next compresses the target image based on the target bit rate to obtain a compressed image; and finally uploads the compressed image to the target device based on a preset communication path.

Thereby, the collection environment can be evaluated through the shooting and collection position of the image, and the bit rate used when uploading the image can be dynamically adjusted differentially based on the collection environment. This enables reducing the amount of transmission resources used during image upload and lowering bandwidth requirements during transmission while ensuring the quality of the uploaded image for its intended use.

In some embodiments, in order to improve the determination effectiveness and accuracy of the collection environment, the execution entity may also periodically and extensively (or comprehensively) collect information surrounding the vehicle, and correspondingly perform a "high-quality" collection environment determination based on this information to generate a corresponding reference collection environment.

For example, the vehicle may periodically perform comprehensive information collection (for example, using the vehicle panoramic images, LiDAR comprehensive scene collection results), and then generate a reference collection environment with high quality and high accuracy based on this information.

After generating this reference collection environment, within this period, and/or when the vehicle has not moved far away from this collection position, the execution entity may choose to directly use this reference collection environment as the aforementioned "collection environment" of the vehicle. Thereby, through this approach, not only can the vehicle current collection environment be more accurately determined through more detailed and comprehensive information, but it also avoids performing comprehensive and detailed collection every time the collection environment needs to be determined, thereby preventing excessive resource consumption and processing time costs.

Correspondingly, for ease of understanding, such a collection position may be referred to as a periodic environment collection position (i.e., a collection position triggered by a period for performing comprehensive collection of information). The reference collection environment is correspondingly determined as that "high-quality result" using the collection information collected at this periodic environment collection position, in a manner similar to the collection environment determination method discussed above.

It should be understood that for this "reference collection environment," the execution entity may, upon reaching a new period or when the vehicle newly arrives at a periodic environment collection position, use the newly determined reference collection environment to replace, update, or delete the previous reference collection environment, for the purpose of maintaining only one effective and usable reference collection environment.

Correspondingly, in such cases, in this step, after marking the collection position of the target image in the electronic map, the execution entity may first obtain this collection position. Then, the execution entity searches for the currently available periodic environment collection position in the electronic map and determines whether it can utilize this periodic environment collection position. For example, the execution entity may determine whether this periodic environment collection position is available by determining whether the distance between this collection position and the periodic environment collection position is less than or equal to a distance threshold.

Next, if the distance between the collection position and the periodic environment collection position is less than or equal to the distance threshold, the execution entity may respond thereto, determine the periodic environment collection position as available, and directly use the reference collection environment corresponding to this periodic environment collection position as the collection environment.

Thereby, through this approach, the execution entity can not only more accurately determine the collection environment through more comprehensive full data, but also save resources for searching for and determining the collection environment after obtaining the target image.

In some embodiments, as discussed above, during the process of determining the collection environment, in addition to solely referencing the collection position, the execution entity may further reference the number of target objects included in the target image while referencing the collection position of the target image in the electronic map. Thereby, the collection environment can be determined more accurately.

Typically, this target object may be understood as a "high-value object" in the target image, for example, objects that can be captured by the target image and that are more desired to be attended to by the model during training.

For example, in the example of determining whether the collection environment is high attention, medium attention, or low attention based on whether the collection position is located at an intersection, the execution entity may further simultaneously determine whether to actually classify this collection environment as a "high attention" type based on whether the target image includes target objects such as other traffic participants that need to be attended to at the intersection, and the number of such target objects. For example, determining whether to classify and determine the collection environment as a high-attention intersection collection environment, a medium-attention intersection, or a low-attention intersection.

In some embodiments, target objects may be determined based on objects that need to be attended to, corresponding to the division criteria of collection environments. For example, when it is more desired to use the target image to train the model's capture and recognition capability for traffic signs, the target objects may be traffic signs.

Correspondingly, if more traffic signs are included, the execution entity may more "confidently" tend to classify the collection environment as a high-attention type of collection environment (for example, high-attention intersection, high-attention ordinary road, highway, etc.), and use a higher target bit rate to provide this target image, in the expectation of more clearly providing the "target objects" and realizing their value.

In some embodiments, during the process of determining the collection environment based on the collection position of the target image in the electronic map and the number of target objects included in the target image, the execution entity may choose to respectively determine scores based on the collection position and the number of target objects, and then use these scores to determine the collection environment.

In this regard, for ease of understanding, Figure 3 may also be referenced. Figure 3 is a flowchart of a process for determining a collection environment provided by an embodiment of the present disclosure, including process 300.

Process 300 specifically includes the following steps.

Step 301: Determine a first environment score based on the collection position of the target image in the electronic map.

Specifically, as discussed above, after the execution entity determines the collection position of the target image in the electronic map, it determines the first environment score based on differences in collection position, according to the actual division standards and reference dimensions employed.

For example, if the division standards are high-attention collection environment, medium-attention collection environment, and low-attention collection environment, the execution entity may use the scores corresponding to intersections, ordinary roads, or highways as the first environment score based on, for example, whether the collection position is located at an intersection, ordinary road, or highway.

As another example, if the collection position is an intersection and the division standards are high-attention intersection, medium-attention intersection, and low-attention intersection, the execution entity may further, as discussed above, use the corresponding score as the first environment score based on indicators such as the historical accident rate corresponding to this intersection.

Step 302: Read the number of target objects included in the target image, and determine a second environment score based on this number;

Specifically, as discussed above, the execution entity may determine the number of target objects included in the target image, and determine the second environment score based on this number. For example, the execution entity may use the score corresponding to the numerical range into which this value falls as the second environment score, based on a numerical range-score correspondence relationship.

Then, the execution entity may obtain a combined environment score through the following Step 303 based on the first environment score and the second environment score;

It should be understood that if different types of target objects are included in the same target image, the execution entity may correspondingly determine respective second environment score sub-values for each type based on the respective numbers corresponding to each type, and then use the second environment score sub-values to obtain the second environment score.

In some optional implementations of this embodiment, the classification of types may be implemented using two criteria: moving object type and stationary object type.

Correspondingly, in this step, the execution entity may determine a first sub-score based on a first number of first target objects belonging to the moving object type, and determine a second sub-score based on a second number of second target objects belonging to the stationary object type.

Then, the execution entity may obtain the second environment score based on the first sub-score and the second sub-score. The scoring criteria for the first sub-score and the second sub-score should be different; that is, the score corresponding to one target object of the moving object type and the score corresponding to one target object of the stationary object type are different.

For example, the execution entity may combine the two by directly adding the first sub-score and the second sub-score to obtain the second environment score. In some embodiments, in order to avoid excessive inflation of the second environment score (for example, causing the second environment score to differ too much from the first environment score, rendering one of them lose its reference value), during the process of obtaining the second environment score, the execution entity may also choose to adjust the first sub-score and the second sub-score through proportional addition or weighted addition, so as to take into account the reference degree of the first sub-score and the second sub-score in different scenarios while limiting the numerical range of the second environment score to the required numerical range.

It should be understood that in some embodiments, scoring may also be performed based on different scoring criteria (for example, referencing different types of target objects) to obtain, for example, a third sub-score, a fourth sub-score, etc. In such cases, the execution entity may similarly determine the second environment score based on the third sub-score and the fourth sub-score through direct addition, proportional addition, or averaging.

Thereby, through this approach, it is possible to flexibly configure whether the execution entity focuses more on providing clearer moving objects or stationary objects, to differentially meet different model training and image usage requirements.

Step 303: Obtain a combined environment score based on the first environment score and the second environment score.

Specifically, in this step, the execution entity may obtain the combined environment score by directly adding the first environment score and the second environment score. Thereby, the first environment score and the second environment score are combined through summation and total score determination to obtain the combined environment score.

In some embodiments, the execution entity may also obtain the combined environment score based on the first environment score and the second environment score through weighted addition. For example, the execution entity may determine the respective addition weights of the first environment score and the second environment score based on reference weights and preferences for position and target object number, and then correspondingly obtain the combined environment score through weighted summation. In some embodiments, the execution entity may also choose to obtain the combined environment score based on the average of the first environment score and the second environment score, thereby more accurately quantifying the collection environment through a combined environment score that more prominently reflects the central tendency. For example, in different embodiments, multiple different second environment scores may be determined due to differences in target object types, and the execution entity may determine this combined environment score through the average of the first environment score and the overall second environment scores.

Step 304: Determine the collection environment based on the numerical range into which the combined environment score falls.

Specifically, as discussed above, for the combined environment score, the execution entity may similarly determine the collection environment according to the numerical range into which the combined environment score falls, by configuring a numerical range-collection environment correspondence.

Thereby, the execution entity can more accurately and finely determine the collection environment by comprehensively considering the collection position and the content of the target image.

In some embodiments, during the process of determining the collection environment corresponding to the target image based on the collection position of the target image in the electronic map, the execution entity may also choose to complete this process by utilizing an LLM. Thereby, the parsing capability of the LLM is leveraged to efficiently and accurately utilize this information, and classify and determine the collection environment corresponding to the target image.

In this regard, the execution entity may first construct prompt information for selecting the collection environment from candidate collection environments based on the collection position of the target image in the electronic map and the number of target objects included in the target image. For example, this prompt information may take the form of "Based on the collection position of the target image in the electronic map, and the number of XX objects and YY objects included in this target image, determine which of the following collection environments should be the collection environment when acquiring this target image: Collection environment A, Collection environment B, Collection environment C."

In some embodiments, this LLM may also be an LLM that has been injected with domain knowledge regarding the above process through pre-training or reinforcement learning of a general-purpose LLM, so that the LLM has the capability to classify the collection environment into a candidate collection environment based on collection position, number of target objects, etc.

Furthermore, in such a process, based on pre-training or default configuration, the LLM may also allow at least partial omission of the "prompt information." For example, even when the prompt information does not specifically list Collection environment A, Collection environment B, Collection environment C, and only takes a form such as "select the collection environment from candidate collection environments," the LLM can still understand that the selection is to be made from Collection environment A, Collection environment B, and Collection environment C.

Thereby, the execution entity can more efficiently and conveniently invoke the LLM to complete the task of determining the collection environment.

Then, the execution entity may invoke the large language model to process the target image and the prompt information, and use the LLM to select the collection environment from the candidate collection environments.

In some embodiments, for this LLM, if the decision model of the vehicle is also built and trained based on an LLM, then this LLM may actually also be a reinforcement learning training result of this vehicle decision model. Thereby, the configuration difficulty is reduced through the approach of reusing the LLM.

On the basis of any of the above embodiments, the execution entity also allows the target device to adjust the bit rate used when obtaining the target image based on requirements. That is, if the target device desires to obtain the target image at an updated bit rate different from the target bit rate, the target device may return this updated bit rate as bit rate adjustment information to the execution entity, to instruct the execution entity to recompress the target image using this updated bit rate and provide the updated compressed image.

Correspondingly, if the execution entity receives bit rate adjustment information returned by the target device, the execution entity may respond thereto, recompress the target image based on the updated bit rate indicated in the bit rate adjustment information to obtain an updated compressed image. Then, the execution entity again uploads the updated compressed image to the target device based on the aforementioned communication path.

Thereby, through this approach, the target device, or the image user, can dynamically adjust the obtained target image (or more specifically, the compressed image) according to requirements, to differentially meet the needs of different users and enhance the user experience.

In some embodiments, if the number of target images belonging to a same target collection environment and recompressed using a same updated bit rate is greater than or equal to a quantity threshold, then in such cases, the "target bit rate" used by the execution entity may be inappropriate, and the execution entity may respond thereto by using this same updated bit rate as the associated bit rate corresponding to the target collection environment, so that in subsequent cases for this collection environment, this same associated bit rate is directly used instead of determining the aforementioned "target bit rate" in the above manner.

That is, if the collection environment is associated with an associated bit rate, then during the process of determining the target bit rate based on the collection environment, the execution entity may respond to the collection environment being associated with an associated bit rate by using the associated bit rate as the target bit rate.

Thereby, the execution entity can adaptively adjust the locally stored and used correspondence between collection environments and target bit rates based on the user update actions, so that the determined and used target bit rate can more closely match the user's requirements, thereby enhancing user experience while reducing the user cost for updating and instructing bit rates.

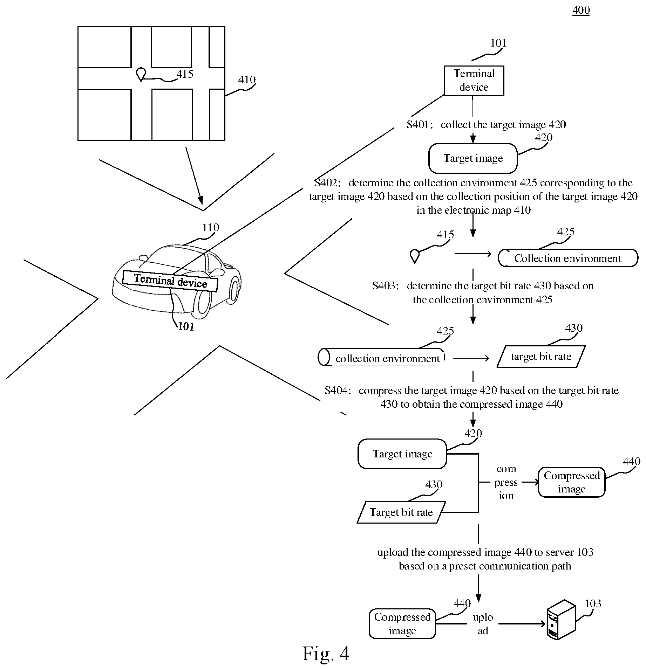

To deepen understanding, the present disclosure also combines a specific application scenario to provide a specific implementation process of image transmission under this specific scenario. In this regard, for ease of understanding, please also refer to Figure 4. Figure 4 is a flowchart of a process for implementing image transmission in an application scenario provided by an embodiment of the present disclosure, including process 400.

For ease of understanding, the exemplary architecture 100 shown in Figure 1 may also be referenced in the discussion of Figure 4. For example, the terminal device 101 disposed in vehicle 110 may serve as the execution entity of the image transmission process to transmit the target image (for example, target image 420) to server 103.

In process 400, the target image 420 may be captured and collected by the terminal device 101 during the travel of the vehicle. For example, during the travel of vehicle 110, the terminal device 101 may collect the target image 420 by executing S401.

Then, the terminal device 101 may determine the collection environment 425 corresponding to the target image 420 based on the collection position of the target image 420 in the electronic map 410 by executing S402. For example, this "collection position" may be the position indicated by the position identifier 415 in the electronic map 410.

Next, the terminal device 101 may determine the target bit rate 430 based on the collection environment 425 by executing S403.

Next, the terminal device 101 may compress the target image 420 based on the target bit rate 430 to obtain the compressed image 440 by executing S404.

Finally, the terminal device 101 may upload the compressed image 440 to server 103 based on a preset communication path by executing S405. Thereby, the process of compressing the target image 420 based on the target bit rate 430 to obtain the compressed image 440 and providing the compressed image 440 is completed.

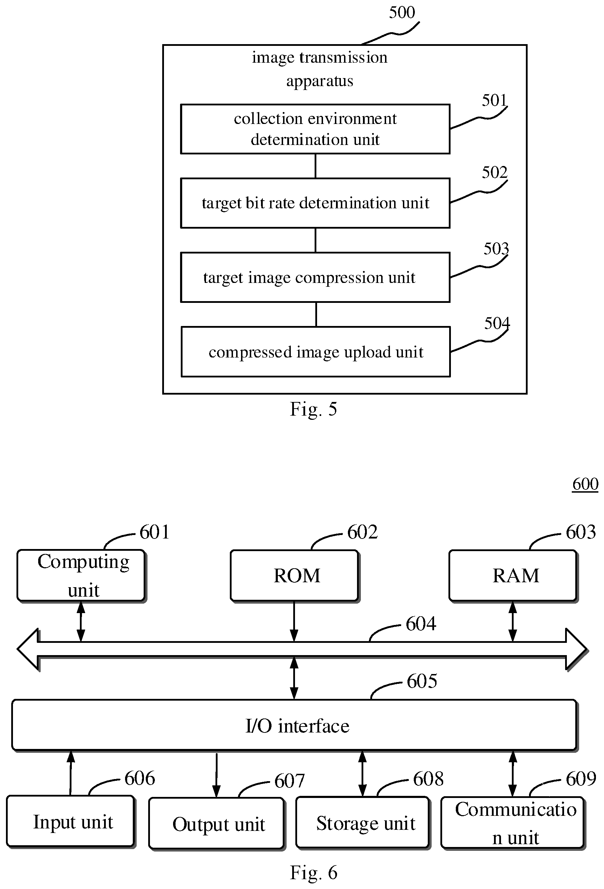

Further referring to Figure 5, as an implementation of the methods shown in the above figures, the present disclosure provides an embodiment of an image transmission apparatus. This apparatus embodiment corresponds to the method embodiment shown in Figure 2, and the apparatus may be specifically applied to various electronic devices.

As shown in Figure 5, the image transmission apparatus 500 of this embodiment may include: a collection environment determination unit 501, a target bit rate determination unit 502, a target image compression unit 503, and a compressed image upload unit 504. Among them, the collection environment determination unit 501 is configured to determine the collection environment corresponding to the target image based on the collection position of the target image in the electronic map; the target bit rate determination unit 502 is configured to determine the target bit rate based on the collection environment; the target image compression unit 503 is configured to compress the target image based on the target bit rate to obtain a compressed image; the compressed image upload unit 504 is configured to upload the compressed image to the target device based on a preset communication path.

In this embodiment, the specific processing and technical effects brought by the collection environment determination unit 501, the target bit rate determination unit 502, the target image compression unit 503, and the compressed image upload unit 504 in the image transmission apparatus 500 may respectively refer to the relevant descriptions of Steps 201-204 in the corresponding embodiment of Figure 2, and will not be repeated here.

In some optional implementations of this embodiment, the target bit rate determination unit 502 includes: a safety level determination sub-unit configured to determine the environmental safety level based on the collection environment; a bit rate determination sub-unit configured to use the reference bit rate corresponding to the environmental safety level as the target bit rate based on a preset level-to-bit-rate correspondence table, where the environmental safety level is positively correlated with the target bit rate.

In some optional implementations of this embodiment, the collection environment determination unit 501 is further configured to determine the collection environment based on the collection position of the target image in the electronic map and the number of target objects included in the target image.

In some optional implementations of this embodiment, the collection environment determination unit 501 includes: a first scoring sub-unit configured to determine a first environment score based on the collection position of the target image in the electronic map; a second scoring sub-unit configured to read the number of target objects included in the target image and determine a second environment score based on the number; a score determination sub-unit configured to obtain a combined environment score based on the first environment score and the second environment score; a collection environment determination sub-unit configured to determine the collection environment based on the numerical range into which the combined environment score falls.

In some optional implementations of this embodiment, the second scoring sub-unit includes: a first scoring module configured to determine a first sub-score based on a first number of first target objects belonging to the moving object type; a second scoring module configured to determine a second sub-score based on a second number of second target objects belonging to the stationary object type; a score determination module configured to obtain the second environment score based on the first sub-score and the second sub-score.

In some optional implementations of this embodiment, the collection environment determination unit 501 includes: a prompt information construction sub-unit configured to construct prompt information for selecting the collection environment from candidate collection environments based on the collection position of the target image in the electronic map and the number of target objects included in the target image; a large language model invocation sub-unit configured to invoke the large language model to process the target image and the prompt information, and use the large language model to select the collection environment from the candidate collection environments.

In some optional implementations of this embodiment, the target image compression unit 503 includes: a bit rate allocation sub-unit configured to allocate corresponding target sub-bit rates from the target bit rate for regions where respective objects are located based on the types of objects included in the target image; a region compression sub-unit configured to perform compression based on the target sub-bit rate for each region to obtain a compressed image.

In some optional implementations of this embodiment, the collection environment determination unit 501 includes: a collection position collection sub-unit configured to obtain the collection position of the target image in the electronic map; a reference collection environment usage sub-unit configured to, in response to the distance between the collection position and the periodic environment collection position being less than or equal to a distance threshold, use the reference collection environment corresponding to the periodic environment collection position as the collection environment, where the reference collection environment is determined using collection information collected at the periodic environment collection position.

In some optional implementations of this embodiment, the apparatus 500 further includes: an image recompression unit configured to, in response to receiving bit rate adjustment information returned by the target device, recompress the target image based on the updated bit rate indicated in the bit rate adjustment information to obtain an updated compressed image; and the compressed image upload unit configured to upload the updated compressed image to the target device based on the communication path.

In some optional implementations of this embodiment, the apparatus 500 further includes: an updated bit rate association unit configured to, in response to the number of target images belonging to the same target collection environment and recompressed using the same updated bit rate being greater than or equal to a quantity threshold, use the updated bit rate as the associated bit rate corresponding to the target collection environment; and the target bit rate determination unit 502 is further configured to, in response to the collection environment being associated with an associated bit rate, use the associated bit rate as the target bit rate.

This embodiment exists as an apparatus embodiment corresponding to the above method embodiment. The image transmission apparatus provided by this embodiment can evaluate the collection environment through the shooting and collection position of the image, and dynamically adjust the bit rate used when uploading the image differentially based on the collection environment. This enables reducing the amount of transmission resources used during image upload and lowering bandwidth requirements during transmission while ensuring the quality of the uploaded image for its intended use.

According to an embodiment of the present disclosure, the present disclosure also provides an electronic device, a readable storage medium, and a computer program product.

Figure 6 shows a schematic block diagram of an exemplary electronic device 600 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions are merely examples, and are not intended to limit the implementations of the present disclosure described and/or claimed herein.

As shown in Figure 6, the device 600 includes a computing unit 601, which may perform various appropriate actions and processes according to a computer program stored in a read-only memory (ROM) 602 or a computer program loaded from a storage unit 608 into a random access memory (RAM) 603. In the RAM 603, various programs and data required for the operation of the device 600 may also be stored. The computing unit 601, ROM 602, and RAM 603 are connected to each other through a bus 604. An input/output (I/O) interface 605 is also connected to the bus 604.

Multiple components in the device 600 are connected to the I/O interface 605, including: an input unit 606, such as a keyboard, mouse, etc.; an output unit 607, such as various types of displays, speakers, etc.; a storage unit 608, such as magnetic disks, optical disks, etc.; and a communication unit 609, such as network cards, modems, wireless communication transceivers, etc. The communication unit 609 allows the device 600 to exchange information/data with other devices through computer networks such as the Internet and/or various telecommunications networks.

The computing unit 601 may be various general and/or dedicated processing components with processing and computing capabilities. Some examples of the computing unit 601 include, but are not limited to, a central processing unit (CPU), a graphics processing unit (GPU), various dedicated artificial intelligence (AI) computing chips, various computing units running machine learning model algorithms, a digital signal processor (DSP), and any suitable processors, controllers, microcontrollers, etc. The computing unit 601 executes the various methods and processes described above, such as the image transmission method. For example, in some embodiments, the image transmission method may be implemented as a computer software program tangibly embodied in a machine-readable medium, such as the storage unit 608. In some embodiments, part or all of the computer program may be loaded and/or installed onto the device 600 via the ROM 602 and/or the communication unit 609. When the computer program is loaded into the RAM 603 and executed by the computing unit 601, one or more steps of the image transmission method described above may be executed. Alternatively, in other embodiments, the computing unit 601 may be configured to execute the image transmission method by any other suitable means (for example, by means of firmware).

The various implementations of the systems and technologies described above herein may be implemented in digital electronic circuit systems, integrated circuit systems, field programmable gate arrays (FPGA), application specific integrated circuits (ASIC), application specific standard products (ASSP), system on chip (SOC) systems, complex programmable logic devices (CPLD), computer hardware, firmware, software, and/or combinations thereof. These various implementations may include: implementation in one or more computer programs, which may be executed and/or interpreted on a programmable system including at least one programmable processor, which may be a dedicated or general-purpose programmable processor, capable of receiving data and instructions from a storage system, at least one input device, and at least one output device, and transmitting data and instructions to the storage system, the at least one input device, and the at least one output device.

Program code for implementing the methods of the present disclosure may be written in any combination of one or more programming languages. These program codes may be provided to a processor or controller of a general-purpose computer, dedicated computer, or other programmable data processing device, such that when the program code is executed by the processor or controller, the functions/operations specified in the flowcharts and/or block diagrams are implemented. The program code may execute entirely on the machine, partly on the machine, partly on the machine and partly on a remote machine as a standalone software package, or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the above. More specific examples of machine-readable storage media would include electrical connections based on one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the above.

To provide interaction with a user, the systems and technologies described herein may be implemented on a computer having: a display device (e.g., a CRT (cathode ray tube) or LCD (liquid crystal display) monitor) for displaying information to the user; and a keyboard and pointing device (e.g., a mouse or trackball) through which the user may provide input to the computer. Other types of devices may also be used to provide interaction with the user; for example, feedback provided to the user may be any form of sensory feedback (e.g., visual feedback, auditory feedback, or tactile feedback); and input from the user may be received in any form, including acoustic input, voice input, or tactile input.

The systems and technologies described herein may be implemented in a computing system including back-end components (e.g., as a data server), or a computing system including middleware components (e.g., an application server), or a computing system including front-end components (e.g., a user computer with a graphical user interface or web browser through which the user may interact with implementations of the systems and technologies described herein), or any combination of such back-end, middleware, or front-end components. The components of the system may be interconnected by any form or medium of digital data communication (e.g., a communication network). Examples of communication networks include: local area networks (LAN), wide area networks (WAN), and the Internet.

A computer system may include a client and a server. The client and server are generally remote from each other and typically interact through a communication network. The relationship of client and server is generated by computer programs running on the respective computers and having a client-server relationship with each other. The server may be a cloud server, also known as a cloud computing server or cloud host, which is a host product in the cloud computing service system, designed to solve the defects of difficult management and weak business scalability in traditional physical hosts and virtual private server (VPS, Virtual Private Server) services. The server may also be a server of a distributed system, or a server combined with blockchain.

According to the technical solution of the embodiment of the present disclosure, the collection environment can be evaluated through the shooting and collection position of the image, and the bit rate used when uploading the image can be dynamically adjusted differentially based on the collection environment. This enables reducing the amount of transmission resources used during image upload and lowering bandwidth requirements during transmission while ensuring the quality of the uploaded image for its intended use.

It should be understood that the various forms of processes shown above may be used, with steps reordered, added, or deleted. For example, the steps described in the present disclosure may be executed in parallel, sequentially, or in different orders, as long as the results expected by the technical solutions provided by the present disclosure can be achieved, which is not limited herein.

The foregoing detailed description is not intended to limit the scope of the present disclosure. It will be appreciated by those skilled in the art that various modifications, combinations, sub-combinations, and substitutions may be made depending on design requirements and other factors. Any modifications, equivalents, and improvements made within the spirit and principles of the present disclosure shall be included within the scope of protection of the present disclosure.

## Claims

1. A method for transmitting an image, comprising:
determining (201) a collection environment corresponding to the target image based on a collection position of the target image in an electronic map;
determining (202) a target bit rate based on the collection environment;
compressing (203) the target image based on the target bit rate to obtain a compressed image; and
uploading (204) the compressed image to a target device based on a preset communication path.

2. The method according to claim 1, wherein the determining the target bit rate based on the collection environment comprises:
determining an environmental safety level based on the collection environment; and
using a reference bit rate corresponding to the environmental safety level as the target bit rate based on a preset level-bit rate correspondence table, wherein the environmental safety level is positively correlated with the target bit rate.

3. The method according to claim 1 or 2, wherein the determining the collection environment corresponding to the target image based on the collection position of the target image in an electronic map comprises:
determining the collection environment based on the collection position of the target image in the electronic map and a number of target objects included in the target image.

4. The method according to claim 3, wherein the determining the collection environment based on the collection position of the target image in the electronic map and the number of target objects included in the target image comprises:
determining (301) a first environment score based on the collection position of the target image in the electronic map;
reading (302) the number of target objects included in the target image, and determining a second environment score based on the number of target objects;
obtaining (303) a combined environment score based on the first environment score and the second environment score; and
determining (304) the collection environment based on a numerical range into which the combined environment score falls.

5. The method according to claim 4, wherein the determining the second environment score based on the number of target objects comprises:
determining a first sub-score based on a first number of first target objects belonging to a moving object type; determining a second sub-score based on a second number of second target objects belonging to a stationary object type; and
obtaining the second environment score based on the first sub-score and the second sub-score.

6. The method according to claim 3, wherein the determining the collection environment based on the collection position of the target image in the electronic map and the number of target objects included in the target image comprises:
constructing prompt information for selecting the collection environment from candidate collection environments based on the collection position of the target image in the electronic map and the number of target objects included in the target image; and
selecting the collection environment from the candidate collection environments by invoking a large language model to process the target image and the prompt information.

7. The method according to one of the preceding claims, wherein the compressing the target image based on the target bit rate to obtain the compressed image comprises:
allocating corresponding target sub-bit rates from the target bit rate to regions where respective objects are located based on types of objects included in the target image; and
performing compression for each region based on the target sub-bit rate to obtain the compressed image.

8. The method according to one of the preceding claims, wherein the determining the collection environment corresponding to the target image based on the collection position of the target image in an electronic map comprises:
obtaining the collection position of the target image in the electronic map; and
in response to a distance between the collection position and a periodic environment collection position being less than or equal to a distance threshold, using a reference collection environment corresponding to the periodic environment collection position as the collection environment, wherein the reference collection environment is determined using collection information collected at the periodic environment collection position.

9. The method according to any one of the preceding claims, the method further comprising:
in response to receiving bit rate adjustment information returned by the target device, re-compressing the target image based on an updated bit rate indicated in the bit rate adjustment information to obtain an updated compressed image; and
uploading the updated compressed image to the target device based on the communication path.

10. The method according to claim 9, the method further comprising:
in response to determining that a number of target images belonging to a same target collection environment and being re-compressed by using a same updated bit rate is greater than or equal to a number threshold, using the updated bit rate as an associated bit rate corresponding to the target collection environment; and
wherein the determining the target bit rate based on the collection environment comprises: in response to the collection environment being associated with the associated bit rate, using the associated bit rate as the target bit rate.

11. An apparatus for transmitting an image, comprising a plurality of units configured to perform the method for transmitting an image according to any one of claims 1-10.

12. A non-transitory computer-readable storage medium storing computer instructions, wherein the computer instructions are used to cause a computer to perform the method for transmitting an image according to any one of claims 1-10.

13. A computer program product, comprising a computer program, wherein the computer program, when executed by a processor, implements the method for transmitting an image according to any one of claims 1-10.
